# EUROPEAN PATENT SPECIFICATION

(11) **EP 0 355 973 B1**
(45) Date of publication and mention of the grant of the patent: **20.12.1995**
(21) Application number: 89307087.0
(22) Date of filing: 13.07.1989
(51) Int. Cl.: H04B 1/48, H04B 1/50

(54) **Digital mobile phone**
Digitales mobiles Fernsprechgerät
Téléphone mobile numérique

(30) Priority: 16.08.1988 FI 883789
(43) Date of publication of application: 28.02.1990
(73) Proprietor: NOKIA MOBILE PHONES LTD., 24101 Salo (FI)
(72) Inventor: Kuisma, Erkki Juhani, SF-24800 Halikko (FI)
(74) Representative: Slingsby, Philip Roy

(56) References cited:
- EP-A- 0 085 180
- FR-A- 2 487 608
- ELECTRONIC LETTERS vol. 20, no. 1, January 1984, LONDON GB pages 25 - 27; GAUTAM ET AL: 'NOVEL REALISATION OF AN AUTOMATIC TRANSMIT-RECEIVE SWITCH AND TWO BANDPASS FILTERS BY A SINGLE SAW FILTER '

## Description

The present invention relates to a digital mobile phone based on time-division multiplexing (TDM), and more particularly to such a phone having an antenna coupler.

Nowadays there is an increased interest in mobile phone systems and various mobile phone networks are being set up in several countries. In the future, the systems will in most cases be entirely digital and the network can be used for transmitting information of various kinds. In this description, the digital Europe-wide GSM system coming into effect in 1991 is used as an example. The mobile phone serving as terminal equipment of the circuit is of transceiver type, the same antenna being used both for transmission and reception. The transmission and the reception take place at different frequencies. Thus, it is necessary to be careful that the transmitted emission does not reach the receiver and, vice versa, that the received emission does not reach the transmitter.

In a digital mobile phone system based on time-division multiplexing (TDM) the transmission and the reception of the mobile phone take place in different intervals and at different frequencies. Thus, a coupling circuit is known among persons skilled in the art, in which the antenna is coupled by an RF switch to the input of the mobile phone receiver or to the output of the transmitter. The switch is controlled by means of control logic.

Such a solution for coupling the antenna to the transmitter and the receiver has been found, however, to have some drawbacks. The RF switch somewhat attenuates the signal passing from the transmitter to the antenna, thus reducing the total efficiency ratio of the transmitter. Moreover, when high transmission powers are being used, e.g. in a GSM system the peak power is 20 W, the power endurance of the switch becomes a problem. The control logic required for controlling the switch increases the power consumption of the device, which again is contradictory to the effort to reduce the energy consumption as much as possible. When the level of the input signal is high, distortion may arise in the RF switch because of its overloading, which again has a detrimental effect on the function of the receiver.

The present invention seeks to provide a mobile phone antenna coupler operating in a digital mobile phone system based on time-division multiplexing (TDM), which partly eliminates and partly reduces the above inconvenience of an antenna coupler based on an RF switch. The invention is characterized by the features disclosed in the characterizing part of claim 1.

In analog mobile phones, which use the same antenna for transmission and reception, a so-called duplex filter is required, which prevents a transmitted emission from reaching the receiver and a received emission from reaching the transmitter. It has now been realized that in a digital TDM mobile phone the RF switch controlled by control logic can be replaced by a duplex filter of the type used in analog mobile phones. Also, in digital mobile phones filters are needed in addition to the RF switch, since selectivity is required in any case in the receiver input, and, in the transmitter output, the harmonic multiples of the output frequency and also other spurious emissions have to be attenuated. Since the transmission and the reception take place in different intervals and at different frequencies in the TDM system, the requirements imposed on the filters need not be as severe as for duplex filters in general. The present invention effectively replaces the RF switch and separate filters of conventional digital mobile phones by one single filter.

An analog mobile phone using a duplex filter is disclosed in Electronics Letters, Volume 20, No. 1, January 1984, London, Pages 25 to 27; J.K. Gautam et al.: "Novel realisation of an automatic transmit - receive switch and two bandpass filters by a single SAW filter". An SAW filter replaces the required two bandpass filters and an antenna directional coupler. To do this the undesired reverse propagation sidelobe (higher) of a group-type unidirectional transducer was used to advantage.

The invention is described in greater detail below with reference to the enclosed drawings, in which:
Figure 1 is a simplified schematic view of the front end of known equipment provided with an RF switch; and
Figure 2 is a simplified schematic view of the front end of equipment accomplished according to the invention without an antenna switch.

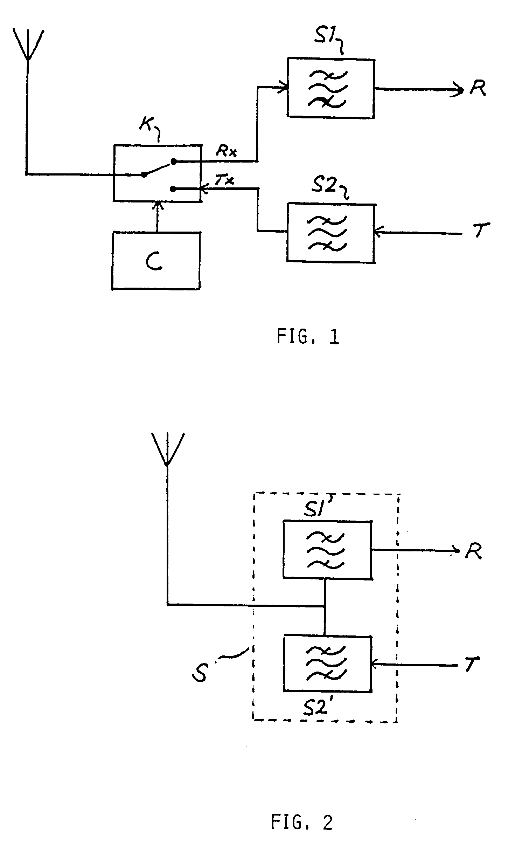

Thus, the known antenna switch circuit of Figure 1 comprises an RF switch K as well as band-pass filters S1 and S2. When a signal is being transmitted, the control logic C guides the switch K into the position Tx. The task of the filter S2 is then to attenuate interference signals outside the transmission band, such as harmonic multiples of the output frequency and other distortion results, leakage signals of the oscillators and other spurious emissions. During reception, the control logic of the switch guides the switch into position Rx, whereby the signal passes over the filter S1 to the receiver. The task of the filter S1 is to attenuate interference signals outside the reception band in a signal received over the antenna.

In Figure 2 the antenna switch K, its control logic C as well as the filters S1 and S2 have been replaced by one filter S according to the invention. The filter S consists of two disparate band-pass filters S1′ and S2′. The antenna is coupled to the filters S1′ and S2′ so that, in the reception band, the transmission filter S2′ presents a very high impedance to the antenna and the reception filter S1′ appears as equal to the antenna impedance. In the transmission band, respectively, the receiver filter S1′ presents a very high impedance to the antenna and the transmission filter S2′ is disposed on the antenna.

The tasks of the filters S1′ and S2′ are the same as those of the filters S1 and S2 of the equipment in Figure 1. On the transmission band the filter S1′ consequently presents a very high impedance to the signal, attenuating the signal so as to prevent it from reaching the receiver at too high a value. The required reverse attenuation from the transmitter to the receiver is of the order of 40 dB.

Filters of various kinds and based on various types of resonators can be used as a filter. A filter based on ceramic resonators is advantageously used. A strip line filter, an SAW filter and a filter based on helical resonators are also possible. Filters of other types also are possible to use.

The antenna coupler circuit of the preferred embodiment of the invention can provide important advantages over equipment in which a separate antenna switch is used. Since no separate antenna switch is needed, a less attenuated emission signal passes over the antenna. The power consumption of the mobile phone decreases as the switch including the control logic are not needed. The distortion caused by the overloading of the switch is also eliminated.

In addition to the above improvements, the antenna coupler circuit of the preferred embodiment can provide cost savings, since the separate receiver and transmitter filters are integrated and since the switch and the logic required for controlling the switch are entirely eliminated. The reduced number of components also improves the cost-effectiveness of the mobile phone manufacture.

As noted above, the required reverse attenuation from the transmitter to the receiver is of the order of 40 dB. For corresponding analog phones, the required reverse attenuation is of the order of 60-70 dB. As a result, a smaller number of resonators can be used in the filter, whereby the filter size decreases. For instance, when ceramic resonators are being used in the filter, the volume of the filter is estimated to be of the order of one cubic centimetre.

The solution of the invention can be used in a subscriber's device in a digital system based on time-division multiplexing (TDM), such as a manual phone, comprising a separate antenna or one that is integrated within the enclosure, car phones and portable phones.

## Claims

1. A digital mobile phone based on time-division multiplexing (TDM), including an antenna, a receiver input (R) for receiving signals during a first time interval and on a first frequency, and a transmitter output (T) for transmitting signals during a second time interval, different from the first time interval, and on a second frequency, different from the first frequency, **characterized** in that a duplex type filter (S), having a reverse attenuation from the transmitter output (T) to the receiver input (R) less than 60 dB, is used to couple the antenna to said receiver input (R) and transmitter output (T).

2. A digital mobile phone according to Claim 1, **characterized** in that a duplex type filter (S) having said reverse attenuation less than 40 dB is used.

3. A digital mobile phone according to Claim 1, **characterized** in that a duplex type filter (S) having said reverse attenuation of the order of 40 dB is used.

4. A digital mobile phone according to Claim 1, 2 or 3, **characterized** in that the duplex type filter (S) is a ceramic filter.

5. A digital mobile phone according to Claim 1, 2 or 3, **characterized** in that the duplex type filter (S) is a strip line filter.

6. A digital mobile phone according to Claim 1, 2 or 3, **characterized** in that the duplex type filter (S) is based on helical resonators.

7. A digital mobile phone according to Claim 1, 2 or 3, **characterized** in that the duplex type filter (S) is a SAW filter.

## Patentansprüche

1. Digitales mobiles Fernsprechgerät mit Zeitmultiplex (TDM), enthaltend eine Antenne. einen Empfangseingang (R) zum Empfang von Signalen auf einer ersten Frequenz während eines ersten Zeitintervalls, sowie einen Sendeausgang (T) zum Aussenden von Signalen auf einer von der ersten Frequenz verschiedenen zweiten Frequenz während eines zweiten Zeitintervalls, das vom ersten Zeitintervall verschieden ist, **dadurch gekennzeichnet**, daß ein Filter (S) vom Duplex-Typ mit einer Sperrdämpfung vom Sendeausgang (T) zum Empfangseingang (R) von weniger als 60 dB verwendet wird, um die Antenne mit dem Empfangseingang (R) und dem Sendeausgang (T) zu koppeln.

2. Digitales mobiles Fernsprechgerät nach Anspruch 1, **dadurch gekennzeichnet**, daß ein Filter (S) vom Duplex-Typ mit einer Sperrdämpfung von weniger als 40 dB verwendet wird.

3. Digitales mobiles Fernsprechgerät nach Anpspruch 1, **dadurch gekennzeichnet**, daß ein Filter (S) vom Duplex-Typ mit einer Sperrdämpfung in der Größenordnung von 40 dB verwendet wird.

4. Digitales mobiles Fernsprechgerät nach Anspruch 1, 2 oder 3, **dadurch gekennzeichnet**, daß das Filter (S) vom Duplex-Typ ein Keramikfilter ist.

5. Digitales mobiles Fernsprechgerät nach Anspruch 1, 2 oder 3, **dadurch gekennzeichnet**, daß das Filer (S) vom Duplex-Typ ein Streifenleitungsfilter ist.

6. Digitales mobiles Fernsprechgerät nach Anspruch 1, 2 oder 3, **dadurch gekennzeichnet**, daß das Filter (S) vom Duplex-Typ durch helische Resonatoren aufgebaut ist.

7. Digitales mobiles Fernsprechgerät nach Anspruch 1, 2 oder 3, **dadurch gekennzeichnet**, daß das Filter (S) vom Duplex-Typ ein SAW Filter ist.

## Revendications

1. Téléphone mobile numérique basé sur le multiplexage par répartition dans le temps (MRT), comportant une antenne, une entrée de récepteur (R) pour recevoir des signaux pendant un premier intervalle de temps et sur une première fréquence et une sortie d'émetteur (T) pour émettre les signaux pendant un second intervalle de temps, différent du premier intervalle de temps et sur une seconde fréquence, différente de la première fréquence, caractérisé en ce qu'un filtre de type duplex (S), présentant un affaiblissement inverse de la sortie de l'émetteur (T) à l'entrée du récepteur (R) inférieur à 60 dB est utilisé pour coupler l'antenne à ladite entrée du récepteur (R) et à ladite sortie de l'émetteur (T).

2. Téléphone mobile numérique selon la revendication 1, caractérisé en ce qu'un filtre du type duplex (S) ayant ledit affaiblissement inverse inférieur à 40 dB est utilisé.

3. Téléphone mobile numérique selon la revendication 1, caractérisé en ce qu'un filtre du type duplex (S) présentant ledit affaiblissement inverse de l'ordre de 40 dB est utilisé.

4. Téléphone mobile numérique selon la revendication 1, 2 ou 3, caractérisé en ce que le filtre du type duplex (S) est un filtre en céramique.

5. Téléphone mobile numérique selon la revendication 1, 2 ou 3, caractérisé en ce que le filtre du type duplex (S) est un filtre à ligne triplaque.

6. Téléphone mobile numérique selon la revendication 1, 2 ou 3, caractérisé en ce que le filtre du type duplex (S) est basé sur des résonateurs hélicoïdaux.

7. Téléphone mobile numérique selon la revendication 1, 2 ou 3, caractérisé en ce que le filtre du type duplex (S) est un filtre SAW.
